# EUROPEAN PATENT APPLICATION

(11) **EP 4 783 320 A1**
(43) Date of publication of application: **29.07.2026**
(21) Application number: 25154001.9
(22) Date of filing: 27.01.2025
(51) Int. Cl.: H01M 50/207, H01M 50/244, H01M 50/247, H01M 50/262

(54) **POWER TOOL BATTERY WITH LOCKING MECHANISM**

(71) Applicant: "Rawplug" Spolka Akcyjna, 51-416 Wroclaw (PL)
(72) Inventor: Trojan, Marcin, 53-312 Wroclaw (PL)
(74) Representative: Wroblewski, Marcin Jan

(57) **Abstract**

A battery (2) adapted to be inserted into a power tool (1), characterised in that it is provided with a locking mechanism (20) comprising: a first guide (211) located in the battery housing upper part (21); a button (22) movably seated in the battery housing (2), comprising a second guide (221) and a ramp (222); a locking rod (23) and a spring (24). In the fixed position, when the battery (2) is inserted into the power tool (1), and when the button (22) is released, the position of the locking rod (23) becomes fixed and permanent due to the pressure of the spring (24), and, by engaging the protrusion (111), the locking rod (23) locks the battery (2) in the power tool (1), preventing its removal. On the other hand, once the button (22) is pressed, the locking rod (23) moves along the first guide (211) and, at the same time, moves along the second guide (221), and ceases to engage the protrusion (111) of the power tool foot (11), thus allowing the battery (2) to be unlocked and removed from the power tool (1).

## Description

### Technical Field

The invention concerns a power tool battery comprising a locking mechanism provided with a new type of button.

### Background Art

In prior art, there are known power tool batteries provided with a locking mechanism comprising a conventional toggle button that moves in an up-and-down direction. In such a locking mechanism, a locking protrusion and the button constitute a single element. The operating principle of this mechanism provides basic functionality, which means locking the battery so that it would not slide out of the power tool during normal operation of the power tool.

In prior art, there are known power tool batteries provided with a locking mechanism comprising a tilt button with a lever mechanism. The locking mechanism designed in this manner uses two separate elements-the button and a lock. The operating principle of the mechanism is such that the button makes a rotary movement and presses against the rotary lock.

From US patent application US2020215680A1 there is known a battery designed for being received in a receiving recess of a hand-held power tool. The battery includes a locking mechanism, which in the locking state prevents it from being pulled out of the receiving recess, wherein the locking mechanism has an unlocking button with a pressing area, by pressing and deflecting which the locking mechanism can be brought into the release state, in which the battery can be pulled out of the receiving recess in a pulling-out direction, wherein the pressing area defines, in the release state and in relation to the pulling-out direction, the first oblique plane in such a way that a vector component of an actuating force acting on the pressing area is oriented in the pulling-out direction.

Locking mechanism solutions known from prior art have a number of disadvantages. Particularly, in mechanisms provided with a conventional toggle button, a large amount of dust causes the button to jam due to the action of a lever arm between the locking protrusion and the button. Therefore, the design of such a locking mechanism requires providing large clearances between the button and the battery, which, however, compromises its dust protection. For most solutions with a conventional toggle button, the pressing surface is not perpendicular to the typical direction of finger movement that the operator must make in order to release the button. This makes it easy for the finger to slip off the button, especially under the conditions of all sorts of dirt, moisture, and haste.

The known solutions are prone to excessive wear of electrical contacts due to vibrations caused by the relative movements of the power tool and battery. The relative movements cause a momentary interruption in continuity of the contact, which creates an electric arc and a high, local temperature rise, which destroys the contact surfaces.

It is therefore desirable to create a solution which would lack the said inconveniences.

### Summary of Invention

The invention concerns a battery adapted to be inserted into a power tool and provided with a locking mechanism comprising: a first guide located in the battery housing upper part, a button movably seated in the battery housing, comprising a second guide and a ramp, a locking rod and a spring. In the fixed position, when the battery is inserted into the power tool, and when the button is released, due to the pressure of the spring, the position of the locking rod becomes fixed and permanent, and, by engaging the protrusion, the locking rod locks the battery in the power tool, preventing its removal. Once the button is pressed, the locking rod moves along the first guide, and at the same time moves along the second guide, and ceases to engage the protrusion of the power tool foot, thus allowing the battery to be unlocked and slide out of the power tool.

A battery designed in this manner along with the locking mechanism has increased jamming resistance due to the use of rotary movement of the button, as opposed to sliding movement with a large lever arm between the pressing surface and the lock in solutions known from prior art, which caused the button to jam, especially when dust penetrated between the button and the battery housing.

Also, the solution according to the invention ensures the elimination of clearances between the battery and the power tool due to the action of a spring force. In addition, the elimination of clearances reduces vibrations of the battery relative to the power tool, which limits the wearing of the battery contacts during high current flows.

The solution according to the invention is characterised by increased dust protection. It is achieved by the ability to use smaller clearances between the button and the battery housing.

Preferably, the ramp has a structure that additionally exerts pressure on the underside of the power tool foot. This solution eliminates the clearances between the bodies of the battery and of the power tool and, consequently, the relative movements of the contacts, which limits their wear during the flow of high currents.

Preferably, the second guide is perpendicular to the direction of movement of inserting the battery into the power tool. This solution minimises the risk of rod displacement, with the force acting only on the bodies of the battery and of the power tool.

Preferably, the button of the locking mechanism is a tilt button and includes an axis of rotation. This allows for reducing the clearances between the battery housing and the body of the button, thereby increasing dust protection.

Preferably, the button of the locking mechanism is adapted to move in a sliding motion along the guides. This solution allows for using an operating angle of the button that is convenient for the operator, without introducing an excessive lever arm that causes the button to jam, as is the case with conventional solutions known from prior art.

Preferably, the button of the locking mechanism is an electronic button adapted to actuate a drive moving the button. This allows for remote management of the ability to remove the battery from the power tool. Another advantage is the ability to completely seal the zone between the button and the battery body, which allows for achieving much greater water and dust protection compared to conventional solutions. In addition, due to a low force required to actuate the electronic button, this solution is more convenient for the power tool operator. The high dust protection of such a solution has a positive effect on the durability of the entire locking mechanism.

Preferably, the locking rod of the locking mechanism has a fixed cross-section. This allows for reducing production costs through technological simplification.

Preferably, the locking rod of the locking mechanism comprises a central slide and side slides with a different cross-section.

Preferably, the locking rod of the locking mechanism comprises the central slide and the side slides, the side slides being connected to the central slide so that they can rotate relative to the central slide. This solution results in better kinematic compliance, and therefore less wear of the elements of the mechanism.

Both these features allow for the use of the side slides or the central slide with a larger cross-sectional area, making them more resistant to abrasion, while also being able to transfer greater shear forces originating from the pressure of the power tool's foot protrusion.

Preferably, the locking rod of the locking mechanism comprises the central slide and the side slides, the side slides being connected to the central slide so that they form a fixed angle with it. This allows for reducing production costs and facilitates assembly.

Preferably, the spring is a single coil spring. Such a solution reduces the production cost of the battery. Reduction in the number of elements facilitates the assembly and maintenance of the battery.

Preferably, the spring is a flat spring made of sheet metal. This allows for reducing the size of the button, and therefore the entire battery.

Preferably, the spring is an elastic element integrated with the button. This solution can reduce the production cost of the button and facilitate the assembly of the battery.

The invention further concerns a battery adapted to be inserted into a power tool, and provided with a locking mechanism comprising: an elastic button fixed at least partially in the housing, containing a ramp and a locking rod, and a first guide located in the battery housing upper part. In the fixed position, when the battery is inserted into the power tool, and when the button is released, due to the pressure of the button, the position of the locking rod becomes fixed and permanent, and, by engaging the protrusion, the locking rod locks the battery in the power tool, preventing its removal. On the other hand, once the button is pressed, the locking rod moves along the first guide, and ceases to engage the protrusion of the power tool foot, thus allowing the battery to be unlocked and removed from the power tool.

Preferably, the ramp has a structure that additionally exerts pressure on the underside of the power tool foot. This solution eliminates the clearances between the bodies of the battery and of the power tool, and thus the relative movements of the contacts, which limits their wear during high current flows.

Preferably, the locking rod of the locking mechanism has a fixed cross-section. This allows for reducing production costs through technological simplification.

Preferably, the locking rod of the locking mechanism comprises a central slide and side slides with a different cross-section.

Both these features allow for the use of the side or central slides with a larger cross-sectional area, making them more resistant to abrasion, while also being able to transfer greater shear forces originating from the pressure of the power tool's foot protrusion.

Preferably, the locking rod of the locking mechanism comprises the central slide and the side slides, the side slides being connected to the central slide so that they can rotate relative to the central slide. This allows for the use of the side slides with a larger cross-sectional area, making them more resistant to abrasion, while also being able to transfer greater shear forces originating from the pressure of the power tool's foot protrusion.

Preferably, the locking rod of the locking mechanism comprises the central slide and the side slides, the side slides being connected to the central slide so that they form a fixed angle with it. With such a solution, the advantages of rotary side slides can be achieved while reducing the production cost and simplifying the assembly of the battery.

### Brief Description of the Drawings

The subject of the invention is shown in embodiments in the drawing, in which:
Fig. 1 shows a kinematic diagram of the invention according to the first embodiment, when the battery is disconnected from the power tool;
Fig. 2 shows a cross-section of the battery and the power tool foot according to the first embodiment of the invention, when the battery is disconnected from the power tool;
Fig. 3 shows a kinematic diagram of the invention according to the first embodiment, when the battery is in the process of being connected to the power tool;
Fig. 4 shows a cross-section of the battery and the power tool foot according to the first embodiment of the invention, when the battery is in the process of being connected to the power tool;
Fig. 5 shows a kinematic diagram of the invention according to the first embodiment, when the battery is connected to the power tool and the button is released;
Fig. 6 shows a cross-section of the battery and the power tool foot according to the first embodiment of the invention, when the battery is connected to the power tool and the button is released, highlighting the position of the locking rod relative to the first guide;
Fig. 7 shows a cross-section of the battery and the power tool foot according to the first embodiment of the invention, when the battery is connected to the power tool and the button is released, highlighting the position of the locking rod relative to the second guide;
Fig. 8 shows a kinematic diagram of the invention according to the first embodiment, when the battery is connected to the power tool and the button is pressed to unlock it;
Fig. 9 shows a cross-section of the battery and the power tool foot according to the first embodiment of the invention, when the battery is connected to the power tool and the button is pressed, highlighting the position of the locking rod relative to the first guide;
Fig. 10 shows a cross-section of the battery and the power tool foot according to the first embodiment of the invention, when the battery is connected to the power tool and the button is pressed, highlighting the position of the locking rod relative to the second guide;
Fig. 11 shows a kinematic diagram of the invention according to the second embodiment, when the button is an elastic button;
Fig. 12 shows a kinematic diagram of the invention according to the third embodiment, when the button is an electronic button;

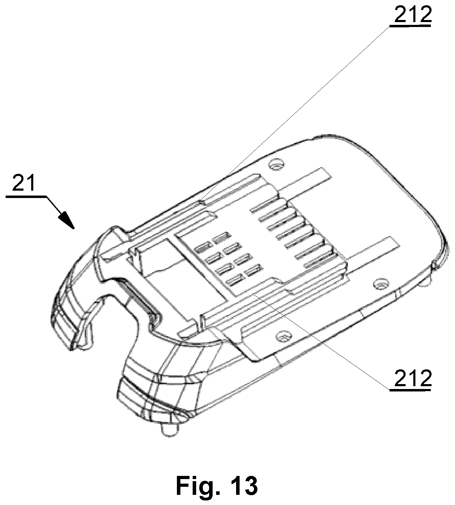

Fig. 13 shows the upper part of the power tool battery housing according to any of the embodiments;
Fig. 14 shows a tilt button of the locking mechanism according to the first embodiment of the invention;
Fig. 15 shows a button of the locking mechanism adapted to move in a sliding motion along the guides according to the fourth embodiment of the invention;
Fig. 16 shows a rod of the locking mechanism according to any embodiment of the invention from 1 to 4;
Fig. 17 shows a rod of the locking mechanism according to any embodiment of the invention from 5 to 8;
Fig. 18 shows a rod of the locking mechanism according to any embodiment of the invention from 9 to 12;
Fig. 19 shows a rod of the locking mechanism according to any embodiment of the invention from 13 to 14;
Fig. 20 shows a rod of the locking mechanism according to embodiment 15 or 17 of the invention;
Fig. 21 shows a rod of the locking mechanism in an alternative design version according to embodiment 18 or 20 of the invention.

### Description of Embodiments

### Embodiment 1

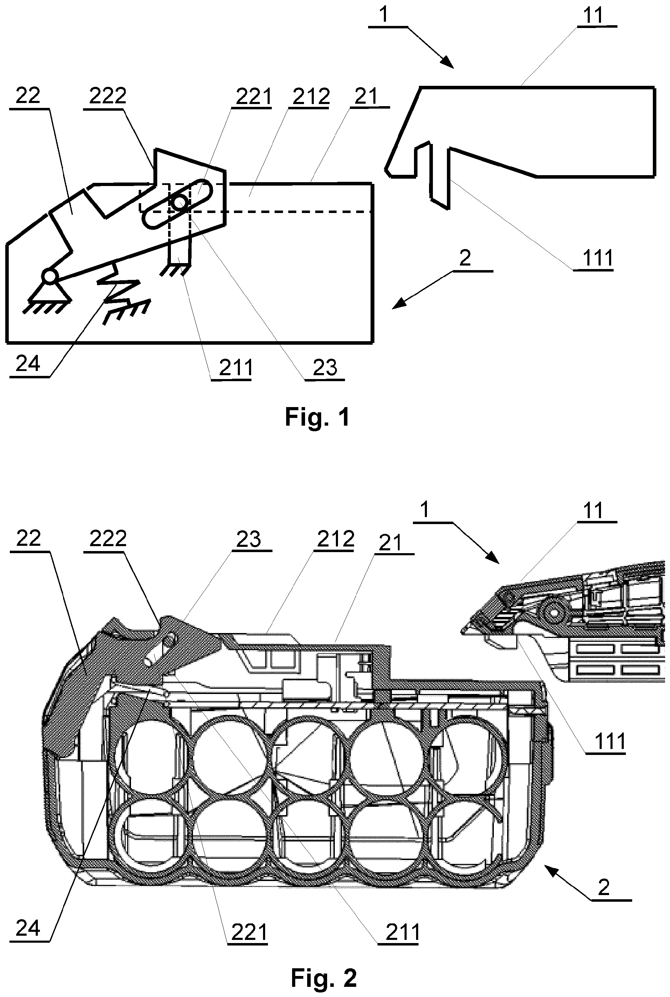

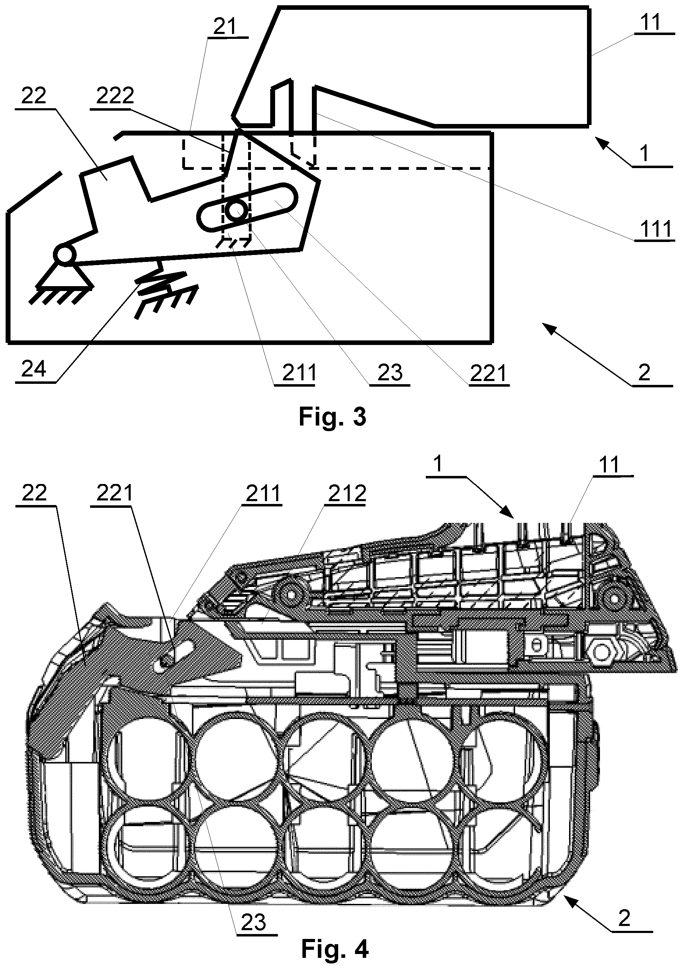

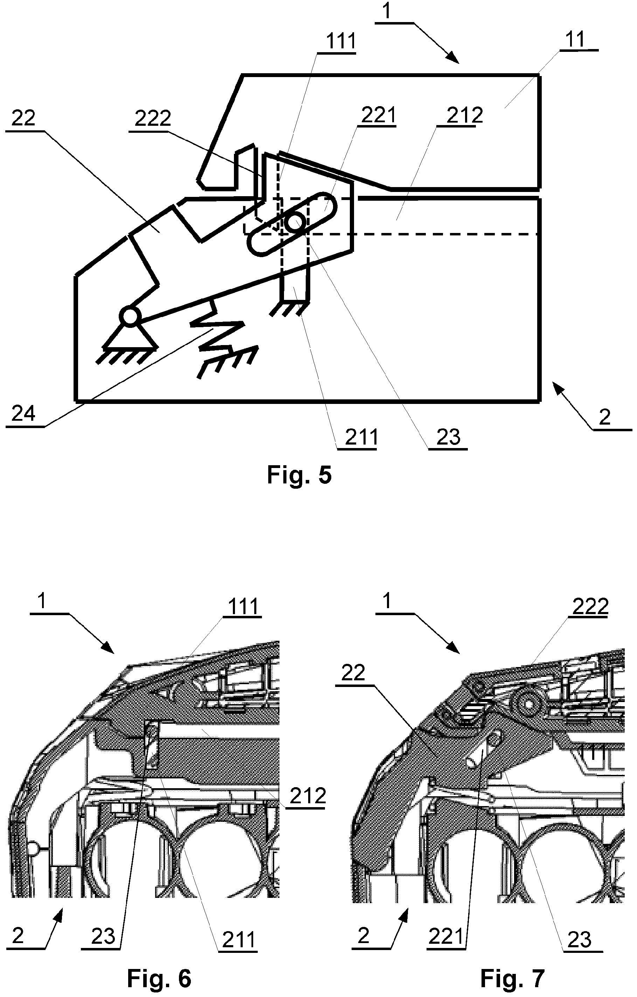

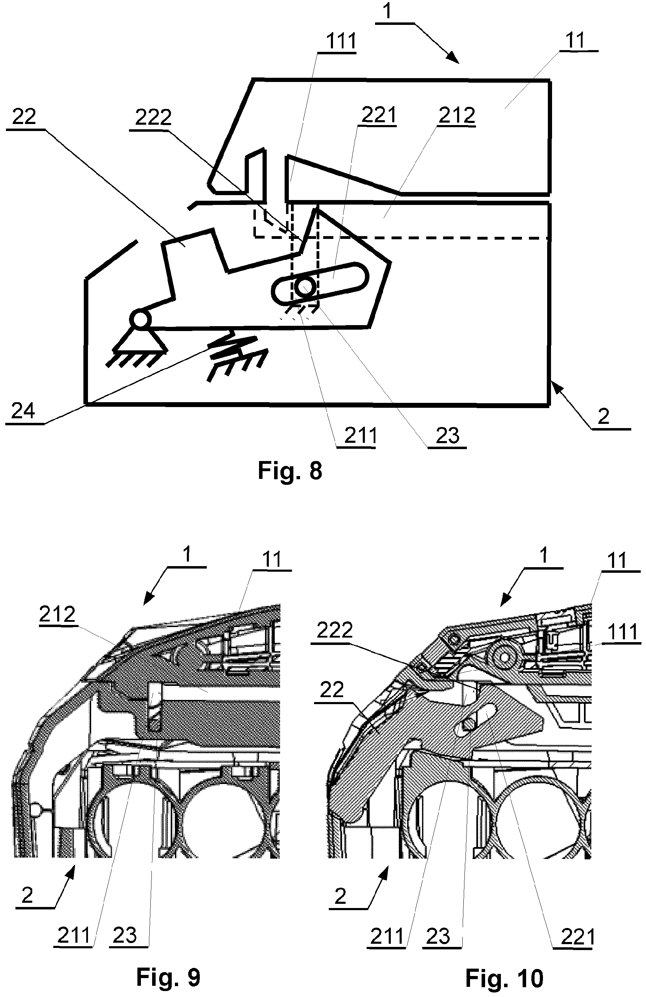

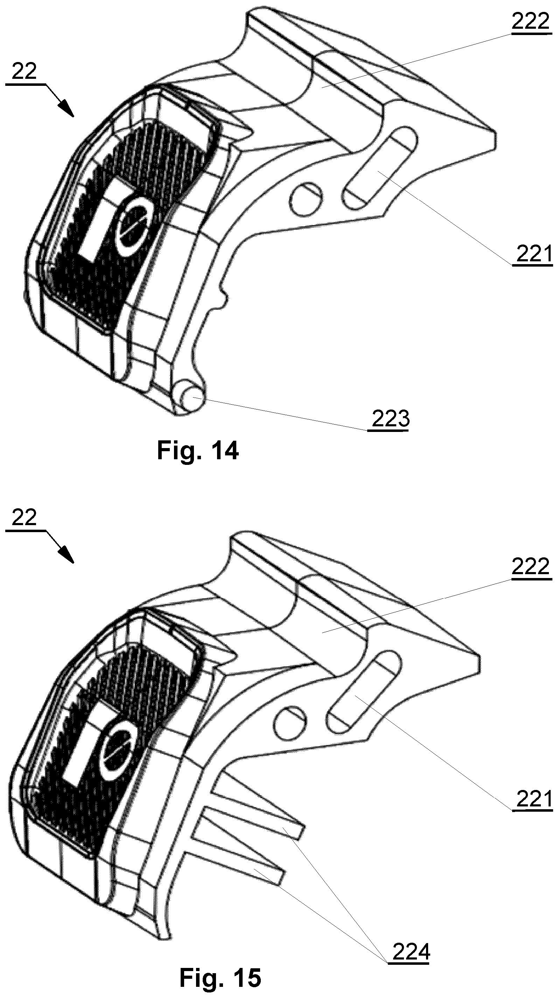

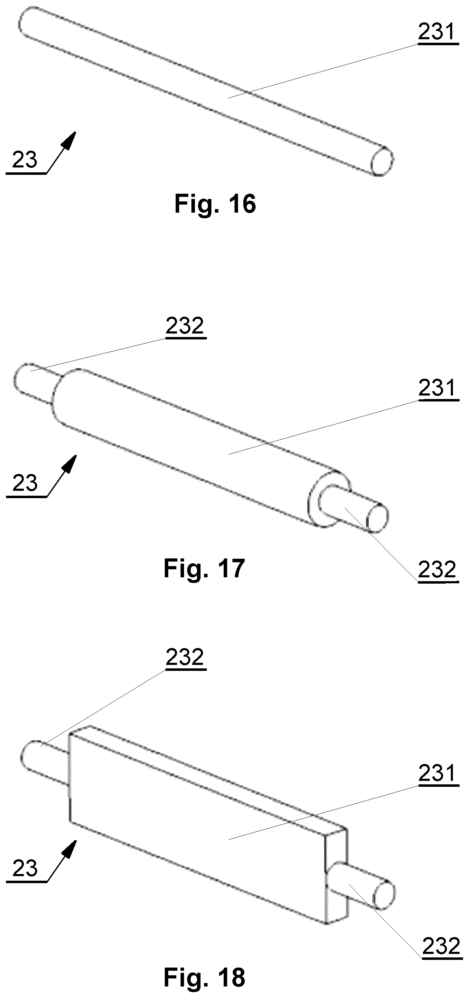

The embodiment is illustrated in Figs. 1 to 10 and in Figs. 14 and 16. Embodiment 1 includes a battery 2 adapted to be inserted into a power tool 1. The battery 2 is provided with a locking mechanism 20 comprising a first guide 211 perpendicular to the direction of movement of inserting the battery 2 into the power tool 1, located in the battery housing upper part 21, and a button 22 movably seated in the battery housing 2. The button 22 comprises a second guide 221 and a ramp 222. The button 22 is a tilt button and includes an axis of rotation 223. The ramp 222 of the button 22 has a structure adapted to exert pressure on the underside of the power tool foot 11. Said elements of the locking mechanism 20 are made of a glass fibre-reinforced polymer material. The locking mechanism 20 further comprises a locking rod 23 and a spring 24 in the form of a coil spring. The locking rod 23 has the form of a uniform cylinder made of steel with a diameter corresponding to the width of the guides 211 and 221. The spring 24 is made of spring steel.

In the fixed position, when the battery 2 is inserted into the power tool 1, and when the button 22 is released, the position of the locking rod 23 becomes fixed and permanent due to the pressure of the spring 24 and, by engaging the protrusion 111, the locking rod 23 locks the battery 2 in the power tool 1, preventing its removal. Once the button 22 has been pressed, the locking rod 23 moves along the first guide 211 and, at the same time, moves along the second guide 221, and ceases to engage the protrusion 111 of the power tool foot 11, thus allowing the battery 2 to be unlocked and removed from the power tool 1. Such an action is impossible when attempting to remove the battery from the power tool with the force acting only on the housings of the battery 2 and of the power tool 1, since the work when retracting the locking rod 23 will be zero.

The insertion of the battery 2 into the power tool 1 is possible due to the front of the power tool foot engaging the ramp 222 during the sliding-in movement, which causes its downward movement and retraction of the locking rod 23 under the rail in the battery housing upper part 21. Then, while moving along the rail 212 in the battery housing upper part 21, the protrusion 111 does not encounter the locking rod 23, and it is possible to correctly mount the battery 2 in the power tool 1. In the fixed position, when the battery 2 is inserted into the power tool 1, the ramp 222 exerts pressure on the underside of the power tool foot, thereby reducing the relative movements of the battery 2 and the power tool 1, and thus the relative movements of the contacts of the power tool 1 and battery 2 are reduced.

In addition to its locking action, the button 22 also exerts pressure on the underside of the power tool foot 11, thereby eliminating the clearances and reducing vibrations between the battery 2 and the power tool 1. The force in the spring 24 protects the system from spontaneous displacement to the lock release position, and exerts pressure on the power tool 1, which eliminates the clearances between the battery 2 and the tool 1, and protects them from mutual wear.

The following elements of the locking mechanism 20 are exposed to abrasion: the locking rod 23 moving in a sliding motion along the guides 211, 221, and the guides 224 contained in the button body (if the button is not elastic by design) and in the battery housing. In order to achieve the lowest possible friction coefficient along the guides 211, 221, and to obtain the maximum available strength, taking into account technological and economic constraints, the locking rod 23 is made of steel, while the guides, and thus the bodies of the battery and button are made of a glass fibre-reinforced polymer material. Similarly, the locking protrusion 111 in the power tool foot is made of a glass fibre-reinforced polymer material in order to increase resistance to shear and pressure concentrated on a small area during contact with the locking rod 23.

### Embodiment 2

Embodiment 2 comprises a solution like in embodiment 1, except that the button 22 is an elastic button, and the locking rod 23 is integrated with it, hence the structure does not include a second guide 221. Also, the structure does not include a spring 24, whose function is taken over by the structure of the button itself.

Embodiment 2 comprises a battery 2 adapted to be inserted into a power tool 1, provided with a locking mechanism 20 comprising an elastic button 22 partially fixed in the housing 2, comprising a ramp 222 and the locking rod 23. The ramp 222 has a structure adapted to exert pressure on the underside of the power tool foot 11. The button 22 is made of a glass fibre-reinforced polymer material, and its locking rod 23 is made of steel. The locking mechanism further comprises a first guide 211 located in the battery housing upper part 21.

In the fixed position, when the battery 2 is inserted into the power tool 1, and when the button 22 is released, the position of the locking rod 23 becomes fixed and permanent due to the pressure of the button 22, and, by engaging the protrusion 111, the locking rod 23 locks the battery 2 in the power tool 1, preventing its removal. On the other hand, once the button 22 is pressed, the locking rod 23 moves along the first guide 211 and ceases to engage the protrusion 111 of the power tool foot 11, thus allowing the battery 2 to be unlocked and removed from the power tool 1.

The body of the elastic button can be made of rubber, an elastomer, metal, a polymer material (plastic), or any combination of the abovementioned materials. On the other hand, the locking rod 23 can be made of metal or a polymer material (plastic).

### Embodiment 3

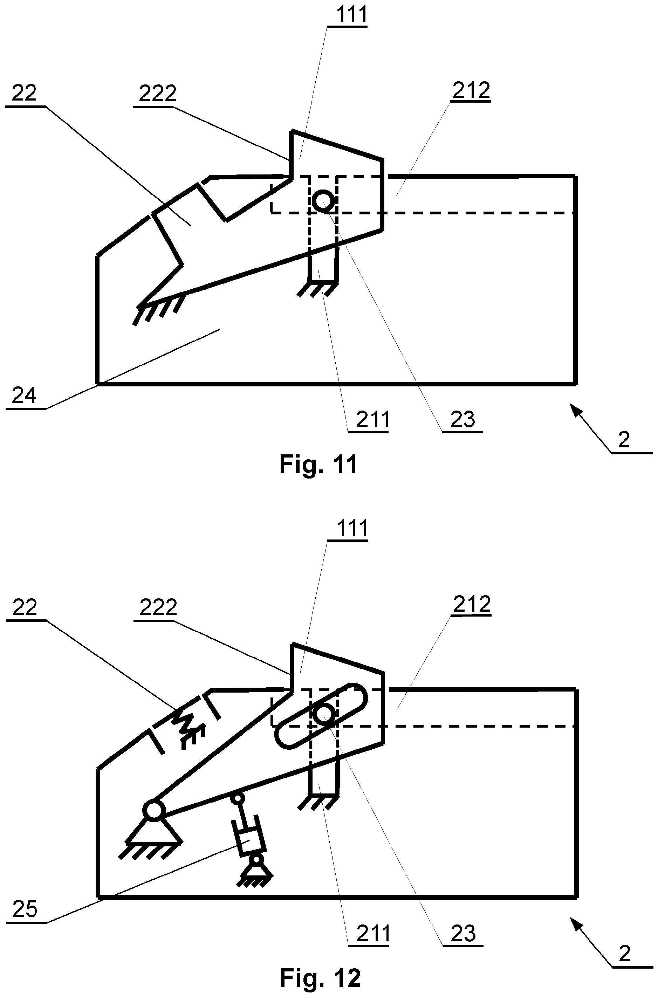

A solution like in embodiment 1, except that the button 22 is an electronic button connected to an actuator that constitutes a button drive 25, as illustrated in Fig. 12. The connection between the electronic button 22 and the actuator that constitutes a button drive 25 is made via a control system in the form of a microcontroller comprising all the elements necessary for control, including memory, analogue-to-digital and digital-to-analogue converters, and actuator control blocks. These elements are not illustrated in Fig. 12. The system is powered by the power tool battery 2.

### Embodiment 4

A solution like in embodiment 1, except that the button 22 is a toggle button adapted to move along the third guides 224, as illustrated in Fig. 15.

### Embodiment 5

A solution like in embodiment 1, except that the rod 23 comprises a central slide 231 in the form of a cylinder, and two side slides 232 in the form of a cylinder with a cross-sectional area smaller than the cross-sectional area of the central slide 231. The side slides 232 are connected to the central slide 231 at both ends thereof, as illustrated in Fig. 17. The entire rod 23 is made of steel. Also, in this embodiment, the spring 24 is a coil spring.

### Embodiment 6

A solution like in embodiment 5, except that the spring 24 is a flat spring made of sheet metal.

### Embodiment 7

A solution like in embodiment 5, except that the spring 24 is an element integrated with the button 22, made of the button's native material.

### Embodiment 8

A solution like in embodiment 1, except that the rod 23 comprises a central slide 231 in the form of a flat bar, and two side slides 232 in the form of a cylinder with the same cross-section as the cross-section of the central slide 231. The side slides 232 are connected to the central slide 231 at both ends thereof, as illustrated in Fig. 18. The entire rod 23 is made of steel.

### Embodiment 9

A solution like in embodiment 8, except that the spring 24 is a flat spring made of sheet metal.

### Embodiment 10

A solution like in embodiment 8, except that the spring 24 is a steel element integrated with the button 22.

### Embodiment 11

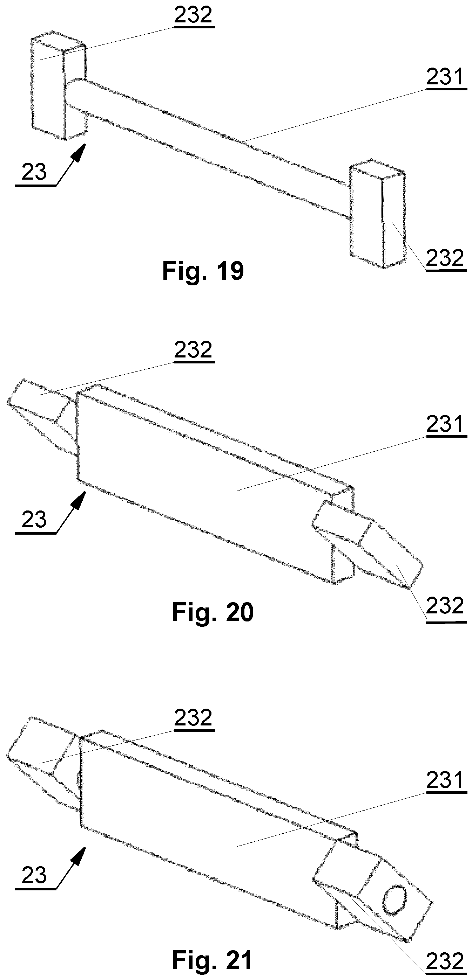

A solution like in embodiment 1, except that the rod 23 comprises a central slide 231 in the form of a cylinder, and two side slides 232 in the form of cuboids with the same cross-section as the cross-section of the central slide 231. The side slides 232 are connected to the central slide 231 at both ends thereof, as illustrated in Fig. 19. The entire rod 23 is made of steel.

### Embodiment 12

A solution like in embodiment 11, except that the spring 24 is a flat spring made of sheet metal.

### Embodiment 13

A solution like in embodiment 1, except that the spring 24 is an element integrated with the button 22 and made of a material containing glass fibre or glass beads.

### Embodiment 14

A solution like in embodiment 1, except that the spring 24 is an element integrated with the button 22 and made of a carbon fibre-containing material.

### Embodiment 15

A solution like in embodiment 1, except that the locking rod 23 of the locking mechanism 20 comprises a central slide 231 and side slides 232, the side slides 232 being connected to the central slide 231 so that they form a fixed angle with it, as illustrated in Fig. 20. The central slide 231 and the side slides 232 have the shape of cuboids made of steel.

### Embodiment 16

A solution like in embodiment 15, except that the spring 24 is a flat spring made of sheet metal.

### Embodiment 17

A solution like in embodiment 15, except that the spring 24 is an element integrated with the button 22, made of the button's native material.

### Embodiment 18

A solution like in embodiment 1, except that the locking rod 23 of the locking mechanism 20 comprises a central slide 231 and side slides 232, the side slides 232 being connected to the central slide 231 so that they can rotate relative to the central slide, as illustrated in Fig. 21. The central slide 231 and the side slides 232 have the shape of rectangular cuboids made of steel.

### Embodiment 19

A solution like in embodiment 18, except that the spring 24 is a flat spring made of sheet metal.

### Embodiment 20

A solution like in embodiment 18, except that the spring 24 is an element integrated with the button 22 and made of a glass fibre-containing material.

### Reference Signs List

| | | | |
|---|---|---|---|
| 1 | -power tool | 221 | -second guide |
| 11 | -power tool foot | 222 | -ramp |
| 111 | -protrusion | 223 | -axis of rotation |
| 2 | -battery | 224 | -third guides |
| 20 | -locking mechanism | 23 | -locking rod |
| 21 | -battery housing upper part | 231 | -central slide |
| 211 | -first guide | 232 | -side slide |
| 212 | -rail | 24 | -spring |
| 22 | -button | 25 | -button drive |

## Claims

1. A battery (2) adapted to be inserted into a power tool (1), **characterised in that** it is provided with a locking mechanism (20) comprising:
- a first guide (211) located in the battery housing upper part (21);
- a button (22) movably seated in the battery housing (2), comprising a second guide (221) and a ramp (222);
- a locking rod (23) and
- a spring (24);
wherein, in the fixed position when the battery (2) is inserted into the power tool (1), and when the button (22) is released, the position of the locking rod (23) becomes fixed and permanent due to the pressure of the spring (24), and, by engaging the protrusion (111), the locking rod (23) locks the battery (2) in the power tool (1), preventing its removal,
whereas, once the button (22) is pressed, the locking rod (23) moves along the first guide (211) and, at the same time, moves along the second guide (221), and ceases to engage the protrusion (111) of the power tool foot (11), thus allowing the battery (2) to be unlocked and removed from the power tool (1).

2. The battery (2) according to claim 1, **characterised in that** the ramp (222) has a structure adapted to exert pressure on the underside of the power tool foot (11).

3. The battery (2) according to claim 1 or 2, **characterised in that** the first guide (211) is perpendicular to the direction of movement of inserting the battery (2) into the power tool (1).

4. The battery (2) according to any one of claims 1 to 3, **characterised in that** the button (22) of its locking mechanism (20) is a tilt button and comprises an axis of rotation (223).

5. The battery (2) according to any one of claims 1 to 3, **characterised in that** the button (22) of its locking mechanism (20) is a button adapted to move in a sliding motion along the third guides (224).

6. The battery (2) according to any one of claims 1 to 3, **characterised in that** the button (22) of its locking mechanism (20) is an electronic button adapted to actuate the drive (25) moving the button.

7. The battery (2) according to any one of claims from 4 to 6, **characterised in that** the locking rod (23) of its locking mechanism (20) either has a fixed cross-section or comprises a central slide (231) and side slides (232) with a different cross-section.

8. The battery (2) according to claim 4, **characterised in that** the locking rod (23) of its locking mechanism (20) comprises the central slide (231) and the side slides (232), the side slides (232) being connected to the central slide (231) so that they can rotate relative to the central slide.

9. The battery (2) according to claim 5, **characterised in that** the locking rod (23) of its locking mechanism (20) comprises the central slide (231) and the side slides (232), the side slides (232) being connected to the central slide (231) so that they form a fixed angle with it.

10. The battery (2) according to any one of claims from 1 to 9, **characterised in that** the spring (24) is a single coil spring, or a flat spring made of sheet metal, or an elastic element integrated with the button (22).

11. A battery (2) adapted to be inserted into a power tool (1), **characterised in that** it is provided with a locking mechanism (20) comprising:
- an elastic button (22) fixed at least partially in the housing (2); containing a ramp (222) and a locking rod (23);
- a first guide (211) located in the battery housing upper part (21);
wherein, in the fixed position when the battery (2) is inserted into the power tool (1), and when the button (22) is released, the position of the locking rod (23) becomes fixed and permanent due to the pressure of the button (22), and, by engaging the protrusion (111), the locking rod (23) locks the battery (2) in the power tool (1), preventing its removal,
whereas, once the button (22) is pressed, the locking rod (23) moves along the first guide (211), and ceases to engage the protrusion (111) of the power tool foot (11), thus allowing the battery (2) to be unlocked and removed from the power tool (1).

12. The battery (2) according to claim 11, **characterised in that** the ramp (222) has a structure adapted to exert pressure on the underside of the power tool foot (11).

13. The battery (2) according to claim 11 or 12, **characterised in that** the locking rod (23) of its locking mechanism (20) either has a fixed cross-section or comprises a central slide (231) and side slides (232) with a different cross-section.

14. The battery (2) according to claim 11 or 12, **characterised in that** the locking rod (23) of its locking mechanism (20) comprises the central slide (231) and the side slides (232), the side slides (232) being connected to the central slide (231) so that they can rotate relative to the central slide.

15. The battery (2) according to claim 11 or 12, **characterised in that** the locking rod (23) of its locking mechanism (20) comprises the central slide (231) and the side slides (232), the side slides (232) being connected to the central slide (231) so that they form a fixed angle with it.
